# EUROPEAN PATENT APPLICATION

(11) **EP 2 514 795 A1**
(43) Date of publication of application: **24.10.2012**
(21) Application number: 10837443.0
(22) Date of filing: 01.12.2010
(51) Int. Cl.: C09J 201/00, B32B 27/00, C09J 7/02, C09J 11/04, C09J 133/08, C09J 133/10, D21H 27/00

(54) **AQUEOUS DISPERSION ADHESIVE COMPOSITION, AND ADHESIVE SHEET**

(30) Priority: 18.12.2009 JP 2009288123
(71) Applicant: Nitto Denko Corporation, Osaka 567-8680 (JP)
(72) Inventor: NAITO, Tomonari, Ibaraki-shi Osaka 567-8680 (JP); ISEKI, Azusa, Ibaraki-shi Osaka 567-8680 (JP); KUBO, Asami, Ibaraki-shi Osaka 567-8680 (JP)
(74) Representative: Grünecker, Kinkeldey, Stockmair & Schwanhäusser
(86) International application number: PCT/JP2010/071461
(87) International publication number: WO 2011/074414

(57) **Abstract**

An aqueous dispersion pressure-sensitive adhesive composition contains an aqueous dispersion polymer and alkali silicate. The mixing ratio of the alkali silicate is 0.01 to 10 parts by weight with respect to 100 parts by weight of the aqueous dispersion polymer.

## Description

### Technical Filed

The present invention relates to an aqueous dispersion pressure-sensitive adhesive composition and a pressure-sensitive adhesive sheet, to be specific, to an aqueous dispersion pressure-sensitive adhesive composition used as a pressure-sensitive adhesive and a pressure-sensitive adhesive sheet in which a pressure-sensitive adhesive layer made of the aqueous dispersion pressure-sensitive adhesive composition is laminated on a substrate.

### Background Art

A pressure-sensitive adhesive sheet including an aqueous dispersion pressure-sensitive adhesive mainly composed of an alkyl (meth)acrylate as a pressure-sensitive adhesive layer is a solventless type pressure-sensitive adhesive sheet without using an organic solvent and has various advantages such as that it is desirable from the viewpoint of environmental hygiene and has excellent solvent resistance.

On the other hand, there may be a case where the aqueous dispersion pressure-sensitive adhesive composition can not achieve an excellent performance in end-peeling properties, holding strength, or the like, compared with a solvent type pressure-sensitive adhesive sheet using an organic solvent. Therefore, for example, it has been proposed that a pressure-sensitive adhesive sheet is formed using an aqueous dispersion pressure-sensitive adhesive composition, which is mainly composed of an alkyl (meth)acrylate and contains a copolymer obtained by copolymerizing a monomer mixture containing a silane monomer, as a pressure-sensitive adhesive layer (ref: for example, the following Patent Document 1).

### Prior Art Document

### Patent Document

Patent Document 1: Japanese Unexamined Patent Publication No. 2001-131511

### Summary of the Invention

### Problems to be solved by the Invention

However, in the pressure-sensitive adhesive sheet described in the above-described Patent Document 1, there may be a case where constant load peeling properties are not sufficient while excellent end-peeling properties and holding strength can be achieved.

In addition, in various industrial fields, there may be a case where a pressure-sensitive adhesive sheet having further more excellent end-peeling properties and holding strength than the pressure-sensitive adhesive sheet described in the above-described Patent Document 1 is required.

It is an object of the present invention to provide a pressure-sensitive adhesive sheet having excellent end-peeling properties and holding strength and furthermore, also having excellent constant load peeling properties, and an aqueous dispersion pressure-sensitive adhesive composition used as a pressure-sensitive adhesive layer of the pressure-sensitive adhesive sheet.

### Solution to the Problems

An aqueous dispersion pressure-sensitive adhesive composition of the present invention contains an aqueous dispersion polymer and alkali silicate, wherein the mixing ratio of the alkali silicate is 0.01 to 10 parts by weight with respect to 100 parts by weight of the aqueous dispersion polymer.

In the aqueous dispersion pressure-sensitive adhesive composition of the present invention, it is preferable that the alkali silicate is at least one selected from the group consisting of lithium silicate, sodium silicate, and potassium silicate.

In the aqueous dispersion pressure-sensitive adhesive composition of the present invention, it is preferable that the aqueous dispersion polymer is obtained by polymerizing a material monomer containing an alkyl (meth)acrylate as a main component.

A pressure-sensitive adhesive sheet of the present invention includes a pressure-sensitive adhesive layer made of the above-described aqueous dispersion pressure-sensitive adhesive composition.

### Effect of the Invention

The aqueous dispersion pressure-sensitive adhesive composition of the present invention contains the alkali silicate at the mixing ratio of 0.01 to 10 parts by weight with respect to 100 parts by weight of the aqueous dispersion polymer, so that excellent end-peeling properties, holding strength, and constant load peeling properties can be achieved.

Therefore, the pressure-sensitive adhesive sheet of the present invention has excellent end-peeling properties, holding strength, and constant load peeling properties.

### Brief Description of the Drawings

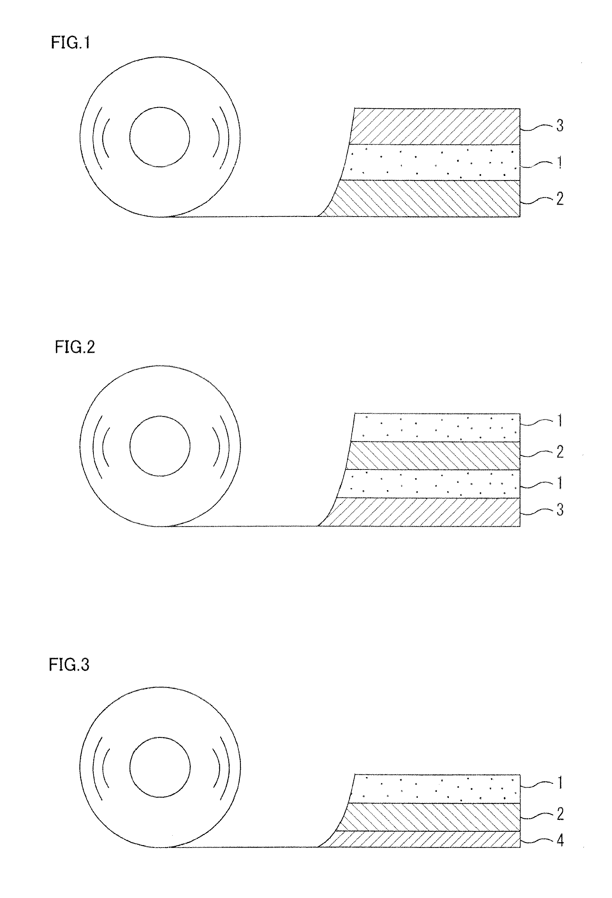

[FIG. 1] FIG. 1 shows a sectional view schematically illustrating one embodiment (an embodiment of being wound around in a state where a pressure-sensitive adhesive layer is laminated on one surface of a substrate and a liner is attached to the pressure-sensitive adhesive layer) of a pressure-sensitive adhesive sheet of the present invention.
[FIG. 2] FIG. 2 shows a sectional view schematically illustrating another embodiment (an embodiment of being wound around in a state where the pressure-sensitive adhesive layers are laminated on both surfaces of the substrate and the liner is attached to one of the pressure-sensitive adhesive layers) of the pressure-sensitive adhesive sheet of the present invention.
[FIG. 3] FIG. 3 shows a sectional view schematically illustrating another embodiment (an embodiment of being wound around in a state where the pressure-sensitive adhesive layer is laminated on one surface of the substrate, having a back coating layer laminated on the other surface thereof) of the pressure-sensitive adhesive sheet of the present invention.

### Embodiment of the Invention

An aqueous dispersion pressure-sensitive adhesive composition of the present invention contains an aqueous dispersion polymer and alkali silicate.

The aqueous dispersion polymer is obtained by, for example, polymerizing a material monomer containing an alkyl (meth)acrylate as a main component.

The alkyl (meth)acrylate is an alkyl methacrylate and/or an alkyl acrylate and an example thereof includes a compound represented by the following general formula (1).

CH₂=CR¹COOR² (1)

(wherein, in the formula, R¹ represents hydrogen or a methyl group and R² represents a straight chain or branched chain alkyl group having 1 to 17 carbon atoms.)
Examples of R² includes a methyl group, an ethyl group, a propyl group, an isopropyl group, a butyl group, an isobutyl group, an s-butyl group, a t-butyl group, a pentyl group, a neopentyl group, an isoamyl group, a hexyl group, a heptyl group, an octyl group, an isooctyl group, a 2-ethylhexyl group, an isononyl group, a decyl group, an isodecyl group, a lauryl group, a bornyl group, a myristyl group, a pentadecyl group, and a stearyl group.

To be more specific, for example, methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, neopentyl (meth)acrylate, hexyl (meth)acrylate, heptyl (meth)acrylate, octyl (meth)acrylate, isooctyl (meth)acrylate, 2-ethylhexyl (meth)acrylate, decyl (meth)acrylate, isodecyl (meth)acrylate, lauryl (meth)acrylate, bornyl (meth)acrylate, myristyl (meth)acrylate, pentadecyl (meth)acrylate, and stearyl (meth)acrylate are used.

As the alkyl (meth)acrylate, preferably, an alkyl (meth)acrylate where R² in the following general formula (1) represents a straight chain or branched chain alkyl group having 2 to 14 carbon atoms is used, more preferably, an alkyl (meth)acrylate where R² represents a straight chain or branched chain alkyl group having 2 to 10 carbon atoms is used, or particularly preferably, an alkyl (meth)acrylate where R² represents a straight chain or branched chain alkyl group having 4 to 8 carbon atoms is used.

These alkyl (meth)acrylate can be used alone or in combination of two or more.

For example, butyl acrylate can be used alone, or butyl acrylate and 2-ethylhexyl acrylate can be used in combination. In that case, the mixing ratio (the butyl acrylate/the 2-ethylhexyl acrylate) of the butyl acrylate and the 2-ethylhexyl acrylate is, for example, 100/0 to 60/40, or preferably 95/5 to 80/20 by weight basis.

The mixing ratio of the alkyl (meth)acrylate is, for example, 80 parts by weight or more (for example, 80 to 99.8 parts by weight), preferably 85 parts by weight or more (for example, 85 to 99.5 parts by weight), or more preferably 90 parts by weight or more (for example, 90 to 99 parts by weight) with respect to 100 parts by weight of the material monomer.

In the material monomer, in order to introduce a crosslinking site for thermal crosslinking, for example, a functional group-containing monomer (a thermally crosslinking functional group-containing monomer) that contains a functional group can be contained. By copolymerizing the functional group-containing monomer, adhesive strength with respect to an adherend can be improved.

Examples of the functional group-containing monomer include carboxyl group-containing monomers or acid anhydride thereof such as acrylic acid, methacrylic acid, itaconic acid, maleic acid, crotonic acid, and maleic unhydride; hydroxyl group-containing monomers such as 2-hydroxyethyl (meth)acrylate, 2-hydroxypropyl (meth)acrylate, and 2-hydroxybutyl (meth)acrylate; amide group-containing monomers such as (meth)acrylamide, N,N-dimethyl (meth)acrylamide, N-methylol (meth)acrylamide, N-methoxymethyl (meth)acrylamide, and N-butoxymethyl (meth)acrylamide; amino group-containing monomers such as dimethylaminoethyl (meth)acrylate and t-butylaminoethyl (meth)acrylate; and glycidyl group-containing monomers such as glycidyl (meth)acrylate; in addition, (meth)acrylonitrile; N-(meth)acryloylmorpholine; and N-vinyl-2-pyrrolidone.

These functional group-containing monomers can be used alone or in combination of two or more.

The mixing ratio of the functional group-containing monomer is, for example, 0.5 to 12 parts by weight, or preferably 1 to 8 parts by weight with respect to 100 parts by weight of the alkyl (meth)acrylate. As the functional group-containing monomer, preferably, carboxyl group-containing monomers such as acrylic acid and methacrylic acid, or acid anhydride thereof are used.

In the material monomer, in order to introduce the crosslinking site to the aqueous dispersion polymer, a silane monomer can be contained as required.

The silane monomer is not particularly limited as long as it has a silicon atom and is copolymerizable with the alkyl (meth)acrylate. An example thereof includes a silane monomer having a (meth)acryloyl group such as a (meth)acryloyloxyalkylsilane derivative having excellent copolymerizability with the alkyl (meth)acrylate. Examples of the silane monomer having a (meth)acryloyl group include 3-methacryloyloxypropyltrimethoxysilane, 3-acryloyloxypropyltrimethoxysilane, 3-methacryloyloxypropyltriethoxysilane, 3-acryloyloxypropyltriethoxysilane, 3-methacryloyloxypropylmethyldimethoxysilane, 3-acryloyloxypropylmethyldimethoxysilane, 3-methacryloyloxypropylmethyldiethoxysilane, and 3-acryloyloxypropylmethyldiethoxysilane. Also, other than the description above, examples of the silane monomer which is copolymerizable with the alkyl (meth)acrylate include vinyltrimethoxysilane, vinyltriethoxysilane, 4-vinylbutyltrimethoxysilane, 4-vinylbutyltriethoxysilane, 8-vinyloetyltrimethoxysilane, 8-vinyloctyltriethoxysilane, 10-methacryloyloxydecyltrimethoxysilane, 10-acryloyloxydecyltrimethoxysilane, 10-methacryloyloxydecyltriethoxysilane, and 10-acryloyloxydecyltriethoxysilane.

These silane monomers can be used alone or in combination of two or more.

The mixing ratio of the silane monomer is, for example, 0.005 to 1 parts by weight, or preferably 0.01 to 0.5 parts by weight with respect to 100 parts by weight of the material monomer. When the mixing ratio of the silane monomer is below 0.005 parts by weight, there may be a case where a cohesive force is reduced because of poor strength of the copolymer. When the mixing ratio of the silane monomer exceeds 1 part by weight, there may be a case where an adhesive force is reduced to such a degree as to make adhesion impossible.

In addition, in the material monomer, for example, in order to improve various properties such as the cohesive force, a copolymerizable monomer which is copolymerizable with the alkyl (meth)acrylate can further be contained as required.

Examples of the copolymerizable monomer include vinyl esters such as vinyl acetate; aromatic vinyl compounds such as styrene and vinyl toluene; alkyl (meth)acrylates of cyclic alcohols such as cyclopentyl di(meth)acrylate and isobornyl (meth)acrylate; and alkyl (meth)acrylates of polyhydric-alcohols such as neopentylglycol di(meth)acrylate, hexanediol di(meth)acrylate, propyleneglycol di(meth)acrylate, trimethylolpropane tri(meth)acrylate, tetramethylolmethane tri(meth)acrylate, and dipentaerythritol hexa(meth) acrylate.

These copolymerizable monomers can be used alone or in combination of two or more.

In the present invention, the aqueous dispersion polymer is obtained by polymerizing the above-described material monomer. Preferably, a material monomer containing an alkyl (meth)acrylate as a main component, and containing a functional group-containing monomer, a silane monomer, and a copolymerizable monomer as required is copolymerized.

The method for the polymerization is not particularly limited and a known polymerization method is used. For example, together with the above-described material monomer, polymerization initiators, emulsifiers, and if necessary, chain transfer agents can be appropriately blended or added in water and then be emulsion polymerized. The method for the emulsion polymerization is not particularly limited and a known emulsion polymerization method such as a collective polymerization method, a continuous dropping polymerization method, and a divisional dropping polymerization method can be used. Reaction conditions are appropriately selected and the polymerization temperature is, for example, 20 to 100°C.

The polymerization initiator is not particularly limited and a known radical polymerization initiator, which is usually used in the emulsion polymerization, is used. Examples thereof include azo-based initiators such as 2,2'-azobisisobutyronitrile, 2,2'-azobis(2-methylpropioneamidine) disulfate, 2,2'-azobis(2-amidinopropane) dihydrochloride, 2,2'-azobis[2-(5-methyl-2-imidazoline-2-yl)propane] dihydrochloride, and 2,2'-azobis(N,N'-dimethyleneisobutylamidine); persulfate-based initiators such as potassium persulfate and ammonium persulfate; peroxide-based initiators such as benzoyl peroxide, t-butyl hydroperoxide, and hydrogen peroxide; substituted ethane-based initiators such as phenyl-substituted ethane; carbonyl-based initiators such as an aromatic carbonyl compound; and redox-based initiators such as combination of persulfate and sodium hydrogen sulfite and combination of peroxide and sodium ascorbate.

These polymerization initiators can be used alone or in combination of two or more.

The mixing ratio of the polymerization initiator is, for example, 0.005 to 1 parts by weight with respect to 100 parts by weight of the material monomer.

The emulsifier is not particularly limited and a known emulsifier, which is usually used in the emulsion polymerization, is used. Examples thereof include anionic emulsifiers such as sodium lauryl sulfate, ammonium lauryl sulfate, sodium dodecylbenzenesulfonate, sodium polyoxyethylene alkyl ether sulfate (for example, sodium polyoxyethylene lauryl sulfate and the like), ammonium polyoxyethylene alkyl phenyl ether sulfate, sodium polyoxyethylene alkyl phenyl ether sulfate, and sodium polyoxyethylene alkyl sulfosuccinate; nonionic emulsifiers such as polyoxyethylene alkyl ether, polyoxyethylene alkyl phenyl ether, polyoxyethylene fatty acid ester, and polyoxyethylene polyoxypropylene block polymer; and in addition, radical polymerizable emulsifiers in which, for example, a propenyl group or the like is introduced.

These emulsifiers can be used alone or in combination of two or more.

The mixing ratio of the emulsifier is, for example, 0.2 to 10 parts by weight, or preferably 0.5 to 5 parts by weight with respect to 100 parts by weight of the material monomer.

The chain transfer agent adjusts a molecular weight of the copolymer as required and a chain transfer agent, which is usually used in the emulsion polymerization, is used. An example thereof includes mercaptanes such as 1-dodecanethiol, mercaptoacetic acid, 2-mercaptoethanol, 2-ethyl hexyl thioglycolate, and 2,3-dimethylcapto-1-propanol.

These chain transfer agents can be used alone or in combination of two or more.

The mixing ratio of the chain transfer agent is, for example, 0.001 to 0.5 parts by weight with respect to 100 parts by weight of the material monomer.

The copolymer resulted from such emulsion polymerization is prepared as an aqueous dispersion of the copolymer mainly composed of the alkyl (meth)acrylate.

The aqueous dispersion can also be prepared by, for example, polymerizing the copolymer mainly composed of the alkyl (meth)acrylate through a method other than the emulsion polymerization method and then, dispersing the resulting polymer in water using the emulsifier.

Preferably, for the purpose of improving stability of particles, a pH of the aqueous dispersion is adjusted, for example, 7 to 9, or preferably 7 to 8 using a base such as ammonia. In such adjustment, a large amount of residual ammonia results in heavier release, so that preferably, the used amount of the ammonia is reduced.

The aqueous dispersion pressure-sensitive adhesive composition of the present invention can be obtained by adding the alkali silicate to the aqueous dispersion prepared in this way.

The alkali silicate is a salt composed of an oxide of an alkali metal (that is, lithium, sodium, potassium, rubidium, cesium, or francium) and a silicon dioxide. Examples thereof include lithium silicate, sodium silicate, and potassium silicate.

The lithium silicate is a salt composed of a lithium oxide and a silicon dioxide and is represented by the following general formula (2).

Li₂O·n¹SiO₂ (2)

(wherein, in the formula, n¹ represents an integer exceeding 0.)
The lithium silicate is classified by the molar ratio (that is, the value of n¹ in the above-described general formula (2)) of the lithium oxide to the silicon dioxide. Examples thereof include lithium orthosilicate (Li₄SiO₄(Li₂O·0.5SiO₂:n¹=0.5)), lithium metasilicate (Li₂SiO₃(Li₂O·SiO₂:n¹=1)), and hexalithium orthodisilicate (Li₆Si₂O₇(Li₂O·2/3SiO₂:n¹=2/3)).

Other than the description above, examples of the lithium silicate include Li₄Si₇O₁₆(Li₂O· 3.5SiO₂:n¹=3.5), Li₄Si₉O₂₀(Li2O·4.5SiO₂:n¹=4.5), and Li₄Si₁₅O₃₂(Li₂O·7.5SiO₂:n¹=7.5).

The lithium silicate may be, for example, a hydrate (Li₂O·n¹SiO₂·x¹H₂O) thereof. In this case, the content ratio of crystal water (x¹ in the above-described formula) is not particularly limited and is set appropriately according to its purpose and use. An example of the hydrate of the lithium silicate includes lithium metasilicate hydrate (LhSiO₃·H₂O(Li₂O·SiO₂·H₂O:n¹=1, x¹=1)).

In addition, the lithium silicate can be used as a lithium silicate aqueous solution. In this case, the solid content concentration of the aqueous solution is, for example, 1 to 50 weight %, or preferably 2 to 40 weight %.

The water solubility of the lithium silicate differs according to the molar ratio (that is, the value of n¹ in the above-described general formula (2)) of the lithium oxide to the silicon dioxide. In the above-described general formula (2), for example, the lithium silicate having n¹ of 2 to 5 is soluble in water. On the other hand, the lithium silicate having n¹ of 6 to 10 is insoluble in water.

As the lithium silicate, a commercially available product can be used. Examples thereof include Lithium Silicate 35 (a lithium silicate aqueous solution, SiO₂/Li₂O (the molar ratio) = 3.5, manufactured by NISSAN CHEMICAL INDUSTRIES, LTD.), Lithium Silicate 45 (a lithium silicate aqueous solution, SiO₂/Li₂O (the molar ratio) = 4.5, manufactured by NISSAN CHEMICAL INDUSTRIES, LTD.), and Lithium Silicate 75 (a lithium silicate aqueous solution, SiO₂/Li₂O (the molar ratio) = 7.5, manufactured by NISSAN CHEMICAL INDUSTRIES, LTD.).

The sodium silicate is a salt composed of a sodium oxide and a silicon dioxide and is represented by the following general formula (3).

Na₂O·n²SiO₂ (3)

(wherein, in the formula, n² represents an integer exceeding 0.)
The sodium silicate is classified by the molar ratio (that is, the value of n² in the above-described general formula (3)) of the sodium oxide to the silicon dioxide. Examples thereof include sodium orthosilicate (Na₄SiO₄(Na₂O·0.5SiO₂:n²=0.5)) and sodium metasilicate (Na₂SiO₃(Na₂O·SiO₂:n²=1)).

Other than the description above, examples of the sodium silicate include Sodium Silicate No.1 (Na₂Si₂O₅(Na₂O·2SiO₂:n²=2), Sodium Silicate No.2 (Na₄Si₅O₁₂(Na₂O·2.5SiO₂:n²=2.5), Sodium Silicate No.3 (Na₂Si₃O₇(Na₂O·3SiO₂:n²=3), and Sodium Silicate No.4 (Na₂Si₄O₉(Na₂O·4SiO₂:n²=4).

The sodium silicate may be, for example, a hydrate (Na₂O·n²SiO₂·x²H₂O) thereof. In this case, the content ratio of the crystal water (x² in the above-described formula) is not particularly limited and is set appropriately according to its purpose and use.

In addition, the sodium silicate can be used as a sodium silicate aqueous solution. In this case, the solid content concentration of the aqueous solution is, for example, 1 to 50 weight %, or preferably 2 to 40 weight %.

As the sodium silicate, a commercially available product can be used. Examples thereof include Silicate Soda No.1 (an aqueous solution of Sodium Silicate No.1, SiO₂/Na₂O (the molar ratio) = 1.3 to 2.2, manufactured by ADEKA CORPORATION, manufactured by Fuji Kagaku CORP.), Silicate Soda No.2 (an aqueous solution of Sodium Silicate No.2, SiO₂/Na₂O (the molar ratio) = 2.2 to 2.6, manufactured by ADEKA CORPORATION, manufactured by Fuji Kagaku CORP.), and Silicate Soda No.3 (an aqueous solution of Sodium Silicate No.3, SiO₂/Na₂O (the molar ratio) = 2.8 to 3.4, manufactured by ADEKA CORPORATION, manufactured by Fuji Kagaku CORP.).

The potassium silicate is a salt composed of a potassium oxide and a silicon dioxide and is represented by the following general formula (4).

K₂O·n³SiO₂ (4)

(wherein, in the formula, n³ represents an integer exceeding 0.)
The potassium silicate is classified by the molar ratio (that is, the value of n³ in the above-described general formula (4)) of the potassium oxide to the silicon dioxide. An example thereof includes potassium metasilicate (K₂SiO₃(K₂O·SiO₂:n³=1)).

Other than the description above, examples of the potassium silicate include Potassium Silicate No.1 (K₂Si₂O₅(K₂O·2SiO₂n³=2) and Potassium Silicate No.2 (K₄Si₇O₁₆(K₂O·3.5SiO₂:n³=3.5).

The potassium silicate may be, for example, a hydrate (K₂O·n³SiO₂·x³H₂O) thereof. In this case, the content ratio of the crystal water (x³ in the above-described formula) is not particularly limited and is set appropriately according to its purpose and use. An example of the hydrate of the potassium silicate includes potassium hydrogen disilicate (K₂Si₄O₉·H₂O(K₂O·4SiO₂·H₂O:n³=4, x³=1), also known as: potassium tetrasilicate).

In addition, the potassium silicate can be used as a potassium silicate aqueous solution. In this case, the solid content concentration of the aqueous solution is, for example, 1 to 50 weight %, or preferably 2 to 40 weight %.

As the potassium silicate, a commercially available product can be used. Examples thereof include No.1 Potassium Silicate (an aqueous solution of No.1 Potassium Silicate, SiO₂/K₂O (the molar ratio) = 1.8 to 2.2, manufactured by Fuji Kagaku CORP.) and No.2 Potassium Silicate (an aqueous solution of No.2 Potassium Silicate, SiO₂/K₂O (the molar ratio) = 3.4 to 3.7, manufactured by Fuji Kagaku CORP.).

These alkali silicates can be used alone or in combination of two or more.

As the alkali silicate, preferably, lithium silicate is used.

In the alkali silicate, metal atoms such as iron can be contained as required.

The mixing ratio of the alkali silicate is, for example, 0.01 to 10 parts by weight, preferably 0.05 to 9 parts by weight, or more preferably 0.1 to 8.5 parts by weight with respect to 100 parts by weight of the aqueous dispersion monomer on the basis of solid content conversion.

When the mixing ratio of the alkali silicate is not more than the above-described upper limit, it is possible to suppress that a pressure-sensitive adhesive is excessively cured. When the mixing ratio of the alkali silicate is not less than the above-described lower limit, it is possible to improve constant load peeling properties, along with excellent end-peeling properties and holding strength.

In addition, in the aqueous dispersion pressure-sensitive adhesive composition of the present invention, a known crosslinking agent or an adhesion imparting component can be appropriately blended according to its purpose and use.

As the crosslinking agent, a known crosslinking agent, which is usually added to the pressure-sensitive adhesive, is used. Examples thereof include an isocyanate crosslinking agent, an epoxy crosslinking agent, an oxazoline crosslinking agent, an aziridine crosslinking agent, and a metal chelate crosslinking agent. The crosslinking agent is not particularly limited and an oil-soluble or water-soluble crosslinking agent can be used. These crosslinking agents can be appropriately used alone or in combination. The mixing ratio thereof is, for example, 0.01 to 5 parts by weight with respect to 100 parts by weight of the solid content of the aqueous dispersion.

Examples of the adhesion imparting component include a rosin resin, a terpene resin, an aliphatic petroleum resin, an aromatic petroleum resin, a copolymer petroleum resin, an alicyclic petroleum resin, a xylene resin, and an elastomer. These adhesion imparting components can be appropriately used alone or in combination. The mixing ratio thereof is, for example, 5 to 50 parts by weight with respect to 100 parts by weight of the solid content of the aqueous dispersion.

In addition, in the aqueous dispersion pressure-sensitive adhesive composition of the present invention, antioxidant, fillers, pigments, and colorant, which are usually added to the pressure-sensitive adhesive, can be appropriately added according to its purpose and use.

As described above, the aqueous dispersion pressure-sensitive adhesive composition of the present invention obtained in this way contains the alkali silicate at the mixing ratio of 0.01 to 10 parts by weight with respect to 100 parts by weight of the aqueous dispersion polymer, so that excellent end-peeling properties, holding strength, and constant load peeling properties can be achieved. Therefore, the aqueous dispersion pressure-sensitive adhesive composition of the present invention can be preferably used as a pressure-sensitive adhesive for forming a pressure-sensitive adhesive layer of a solventless-type pressure-sensitive adhesive sheet.

Next, the pressure-sensitive adhesive sheet using the aqueous dispersion pressure-sensitive adhesive composition of the present invention is described in details.

In the pressure-sensitive adhesive sheet of the present invention, the pressure-sensitive adhesive layer made of the above-described aqueous dispersion pressure-sensitive adhesive composition is laminated on a substrate.

The substrate is not particularly limited and a substrate, which is usually used in the pressure-sensitive adhesive sheet, is used. Examples thereof include plastic films such as a polypropylene film, an ethylene-propylene copolymer film, a polyester film, and polyvinyl chloride; papers such as kraft paper; fabrics such as cotton and staple fiber; nonwoven fabrics such as polyester nonwoven fabric and vinylon nonwoven fabric; and metal foils. As the plastic films, either non-stretched film or stretched (uniaxially stretched or biaxially stretched) film can be used. In the substrate, a surface which is to be coated with the aqueous dispersion pressure-sensitive adhesive composition can be subjected to an undercoating treatment with a primer or be subjected to a surface treatment by corona discharge method or the like, which are usually used. The thickness of the substrate is appropriately selected according to its purpose and use and is, for example, 10 to 500 µm.

The method for laminating the pressure-sensitive adhesive layer made of the aqueous dispersion pressure-sensitive adhesive composition on the substrate is not particularly limited and a known coating method is used. For example, the aqueous dispersion pressure-sensitive adhesive composition is applied onto the substrate using a coater to then be dried and subjected to a thermal crosslinking treatment by heating, so that the aqueous dispersion pressure-sensitive adhesive composition can be formed to be laminated as the pressure-sensitive adhesive layer.

The coater is not particularly limited and a coater, which is usually used in the lamination of the pressure-sensitive adhesive layer, is used. Examples thereof include a gravure roll coater, a reverse roll coater, a kiss roll coater, a dip roll coater, a bar coater, a knife coater, and a spray coater.

In the coating with the coater, the aqueous dispersion pressure-sensitive adhesive composition is applied such that the thickness of the pressure-sensitive adhesive layer after drying is, for example, 10 to 100 µm.

Next, the pressure-sensitive adhesive layer is formed by heating. The heating is performed by a known method at a temperature of, for example, 50 to 200°C, or preferably 80 to 160°C. The heating is performed until the temperature reaches a temperature at which a crosslinking reaction progresses according to the type of the silane monomer and the crosslinking agent. Preferably, the heating is performed such that a solvent-insoluble component of the pressure-sensitive adhesive layer after the crosslinking treatment is, for example, 15 to 70 weight %. In this method, preferably, the molecular weight (the weight average molecular weight by GPC, standard polystyrene conversion) of a solvent-soluble component of the pressure-sensitive adhesive layer after the crosslinking treatment is set to be, for example, 100000 to 600000, or preferably 200000 to 450000. The molecular weight of the solvent-insoluble component and the solvent-soluble component of the pressure-sensitive adhesive layer after the crosslinking treatment can be arbitrarily set by appropriately adjusting, for example, the mixing ratio of the functional group-containing monomer or the silane monomer with respect to the total amount of the material monomer, the type and the mixing ratio of the chain transfer agent and the crosslinking agent, or particularly the mixing ratio of the silane monomer and the chain transfer agent.

The pressure-sensitive adhesive sheet of the present invention is not particularly limited and can be obtained as follows: for example, the pressure-sensitive adhesive layer is laminated on the substrate in this way and a release liner is further attached thereto as required to then be wound around. The release liner is not particularly limited and a release liner, which is usually used in the pressure-sensitive adhesive, is used. An example thereof includes a release liner in which a release agent composed of a silicone release agent is laminated on one surface or both surfaces of a thin substrate. The thickness thereof is not particularly limited and is, for example, 15 µm or more, or preferably about 25 to 500 µm.

To be more specific, for example, as shown in FIG. 1, the pressure-sensitive adhesive sheet of the present invention can be obtained by laminating a pressure-sensitive adhesive layer 1 on one surface of a substrate 2 and allowing a liner 3 to be attached onto the pressure-sensitive adhesive layer 1 to be wound around. Alternatively, for example, as shown in FIG. 2, the pressure-sensitive adhesive sheet of the present invention can also be obtained by laminating the pressure-sensitive adhesive layers 1 on both surfaces of the substrate 2 and allowing the liner 3 to be attached onto one of the pressure-sensitive adhesive layers 1, which is laminated on one surface of the substrate 2, to be wound around. In addition, as shown in FIG. 3, for example, the pressure-sensitive adhesive sheet of the present invention can also be obtained by laminating the pressure-sensitive adhesive layer 1 on one surface of the substrate 2, having a back coating layer 4 composed of a silicone back coating agent and the like laminated on the other surface thereof to be wound around.

Regardless of the above-described form, the pressure-sensitive adhesive sheet of the present invention can be produced in various forms such as tape, sheet, or film. In addition, the pressure-sensitive adhesive sheet of the present invention can also be stored and used in various forms without being wound around according to its purpose and use.

In the pressure-sensitive adhesive sheet of the present invention obtained in this way, the pressure-sensitive adhesive layer is formed by the aqueous dispersion pressure-sensitive adhesive composition of the present invention containing the alkali silicate at the mixing ratio of 0.01 to 10 parts by weight with respect to 100 parts by weight of the aqueous dispersion polymer, so that excellent end-peeling properties, holding strength, and constant load peeling properties are held.

It is presumed that the constant load peeling properties are improved because, for example, when the pressure-sensitive adhesive sheet is formed from the aqueous dispersion pressure-sensitive adhesive composition (an aqueous dispersion) through a drying process, the alkali silicase is disposed and solidified so as to reinforce the space between particles in the aqueous dispersion, so that bulk properties are toughened.

### Examples

The present invention will now be described in more detail by way of Examples and Comparative Examples. However, the present invention is not limited to the following Examples and Comparative Examples. In the following description, the units "part(s)" and "%" are weight basis, unless otherwise noted.

### Example 1

In a reaction vessel equipped with a condenser tube, a nitrogen introducing tube, a thermometer, and a stirrer, 90 parts of butyl acrylate, 10 parts of 2-ethylhexyl acrylate, 3 parts of acrylic acid, 0.06 parts of 3-methacryloyloxypropyl-triethoxysilane (KBM-503, manufactured by Shin-Etsu Chemical Co., Ltd.), 0.05 parts of 1-dodecanethiol, and 0.1 parts of 2,2'-azobis[2-(5-methyl-2-imidazoline-2-yl)propane] dihydrochloride were added to 100 parts of water added with 2 parts of sodium polyoxyethylene lauryl sulfate to be emulsion polymerized. Thereafter, the pH was adjusted to 8 by adding 10 % aqueous ammonia thereto, so that an aqueous dispersion of a copolymer mainly composed of an alkyl (meth)acrylate was prepared.

30 parts of a rosin resin (SUPER ESTER E-100, manufactured by Arakawa Chemical Industries, Ltd.) was added to 100 parts of the solid content of the aqueous dispersion. Thereafter, 0.2 parts of the solid content of lithium silicate (Lithium Silicate 45 (a solid content concentration: 26 weight %), manufactured by NISSAN CHEMICAL INDUSTRIES, LTD.) was added to 100 parts of the solid content of the aqueous dispersion, so that an aqueous dispersion pressure-sensitive adhesive composition was obtained.

The aqueous dispersion pressure-sensitive adhesive composition was applied onto a release liner (SLB-80W5D, manufactured by Kaito Chemical Industry Co., Ltd.) applied with a silicone release agent to be dried at 120°C for 3 minutes, so that a pressure-sensitive adhesive sheet on which a pressure-sensitive adhesive layer having a thickness of 50 µm was laminated was obtained.

### Example 2

An aqueous dispersion pressure-sensitive adhesive composition and a pressure-sensitive adhesive sheet were obtained in the same manner as in Example 1, except that 0.8 parts of the solid content of the lithium silicate (Lithium Silicate 45 (a solid content concentration: 26 weight %), manufactured by NISSAN CHEMICAL INDUSTRIES, LTD.) was added to 100 parts of the solid content of the aqueous dispersion.

### Example 3

An aqueous dispersion pressure-sensitive adhesive composition and a pressure-sensitive adhesive sheet were obtained in the same manner as in Example 1, except that 1.7 parts of the solid content of the lithium silicate (Lithium Silicate 45 (a solid content concentration: 26 weight %), manufactured by NISSAN CHEMICAL INDUSTRIES, LTD.) was added to 100 parts of the solid content of the aqueous dispersion.

### Example 4

An aqueous dispersion pressure-sensitive adhesive composition and a pressure-sensitive adhesive sheet were obtained in the same manner as in Example 1, except that 3.4 parts of the solid content of the lithium silicate (Lithium Silicate 45 (a solid content concentration: 26 weight %), manufactured by NISSAN CHEMICAL INDUSTRIES, LTD.) was added to 100 parts of the solid content of the aqueous dispersion.

### Example 5

An aqueous dispersion pressure-sensitive adhesive composition and a pressure-sensitive adhesive sheet were obtained in the same manner as in Example 1, except that 8.5 parts of the solid content of the lithium silicate (Lithium Silicate 45 (a solid content concentration: 26 weight %), manufactured by NISSAN CHEMICAL INDUSTRIES, LTD.) was added to 100 parts of the solid content of the aqueous dispersion.

### Example 6

An aqueous dispersion pressure-sensitive adhesive composition and a pressure-sensitive adhesive sheet were obtained in the same manner as in Example 1, except that 3.4 parts of the solid content of sodium silicate (Silicate Soda No.3 (a solid content concentration: 38.3 weight %), manufactured by ADEKA CORPORATION) was added to 100 parts of the solid content of the aqueous dispersion instead of 0.2 parts of the lithium silicate (Lithium Silicate 45 (a solid content concentration: 26 weight %), manufactured by NISSAN CHEMICAL INDUSTRIES, LTD.).

### Comparative Example 1

An aqueous dispersion pressure-sensitive adhesive composition and a pressure-sensitive adhesive sheet were obtained in the same manner as in Example 1, except that 0.2 parts of the lithium silicate (Lithium Silicate 45 (a solid content concentration: 26 weight %), manufactured by NISSAN CHEMICAL INDUSTRIES, LTD.) was not added.

### Comparative Example 2

An aqueous dispersion pressure-sensitive adhesive composition and a pressure-sensitive adhesive sheet were obtained in the same manner as in Example 1, except that 12.0 parts of the solid content of the lithium silicate (Lithium Silicate 45 (a solid content concentration: 26 weight %), manufactured by NISSAN CHEMICAL INDUSTRIES, LTD.) was added to 100 parts of the solid content of the aqueous dispersion.

### Evaluation

### 1) End-Peeling Property Test

Each of the pressure-sensitive adhesive sheets obtained in Examples and Comparative Examples was attached onto an aluminum board (area: 10 mm × 100 mm) having a thickness of 0.5 mm to be curved into a circular arc shape having a diameter of 50 mm.

Next, the release liner was peeled off and then, the pressure-sensitive adhesive sheet laminated with the aluminum board was attached onto an acrylic board, a polypropylene board, and a glass board respectively as a test board, with a laminator.

Thereafter, the obtained laminated board was allowed to stand at 23°C for 24 hours to measure the height at which an end portion of the aluminum board was peeled off (that is, a distance where an end portion of the aluminum board separates from a laminate formed of the test boards and a pressure-sensitive adhesive sheet. The results are shown in Table 1.

### 2) Holding Strength Test

Each of the pressure-sensitive adhesive sheets obtained in Examples and Comparative Examples was attached onto a phenol resin board with a contact area of 10 mm × 20 mm and the obtained laminate was allowed to stand for one night and then, was allowed to stand at 40°C for 30 minutes. Thereafter, the phenol resin board was vertically hung down and 500 g of the uniform load was applied to a free end of a pressure-sensitive adhesive tape to measure a gap distance thereof after being allowed to stand at 40°C for 1 hour. The results are shown in Table 1.

### 3) Constant Load Peeling Property Test

Each of the pressure-sensitive adhesive sheets obtained in Examples and Comparative Examples was attached (compressively bonded) onto an acrylic board, a polypropylene board, and a glass board respectively as a test board, with a contact area of 20 mm × 50 mm by a method of reciprocating a rubber roller having a load of 2 kg once. Then, 100 g of the uniform load was applied to an end of each of the resulting test pieces to measure a peeling distance of the pressure-sensitive adhesive sheet from the test boards after being allowed to stand for 24 hours. The results are shown in Table 1.

### [Table 1]

**Table 1**

| | | | | Example 1 | Example 2 | Example 3 | Example 4 | Example 5 | Examples 6 | Comparative Example 1 | Comparative Example 2 |
|---|---|---|---|---|---|---|---|---|---|---|---|
| Mixing Ratio (Parts by weight) | | Potassium Silicate (Solid Content) | | 0.2 | 0.8 | 1.7 | 3.4 | 8.5 | - | - | 12.0 |
| | | Sodium Silicate (Solid Content) | | - | - | - | - | - | 3.4 | - | - |
| Evaluation | End-Peeling Property | Peeling Height (mm) | Acrylic Board | 1.4 | 1.4 | 11 | 1.4 | 0.9 | 0.9 | 2.2 | Adhesion Impossible |
| | | | Polypropylene Board | 2.9 | 2.1 | 1.5 | 1.8 | 3.8 | 1.3 | 4.0 | Adhesion Impossible |
| | | | Glass Board | 2.0 | 1.8 | 1.8 | 1.7 | 1.5 | 1.8 | 2.5 | Adhesion Impossible |
| | Holding Strength | Gap Distance (mm) | Phenol Resin Board | 0.3 | 0.2 | 0.2 | 0.2 | 0.1 | 0.1 | 0.4 | Immediately Dropping |
| | Constant Load Peeling Property | Peeling Distance (mm) | Acrylic Board | 13.8 | 11.8 | 6.0 | 5.8 | 0.8 | 0.0 | 19.5 | Immediately Dropping |
| | | | Polypropylene Board | 9.5 | 7.0 | 4.5 | 4.8 | 1.3 | 1.0 | 10.3 | Immediately Dropping |
| | | | Glass Board | 9.0 | 9.3 | 6.8 | 3.0 | 0.5 | 0.0 | 9.5 | Immediately Dropping |

As shown in Table 1, the pressure-sensitive adhesive sheet formed of the aqueous dispersion pressure-sensitive adhesive composition containing the alkali silicate at the mixing ratio of 0.01 to 10 parts by weight with respect to 100 parts by weight of the aqueous dispersion polymer can have excellent end-peeling properties, holding strength, and constant load peeling properties.

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### Industrial Applicability

The aqueous dispersion pressure-sensitive adhesive composition and the pressure-sensitive adhesive sheet of the present invention can be used in various industrial fields requiring adhesion.

## Claims

1. An aqueous dispersion pressure-sensitive adhesive composition comprising:
an aqueous dispersion polymer and alkali silicate, wherein
the mixing ratio of the alkali silicate is 0.01 to 10 parts by weight with respect to 100 parts by weight of the aqueous dispersion polymer.

2. The aqueous dispersion pressure-sensitive adhesive composition according to claim 1, wherein the alkali silicate is at least one selected from the group consisting of lithium silicate, sodium silicate, and potassium silicate.

3. The aqueous dispersion pressure-sensitive adhesive composition according to claim 1, wherein the aqueous dispersion polymer is obtained by polymerizing a material monomer containing an alkyl (meth)acrylate as a main component.

4. A pressure-sensitive adhesive sheet comprising:
a pressure-sensitive adhesive layer made of an aqueous dispersion pressure-sensitive adhesive composition, wherein
the aqueous dispersion pressure-sensitive adhesive composition comprising
an aqueous dispersion polymer and alkali silicate, and
the mixing ratio of the alkali silicate is 0.01 to 10 parts by weight with respect to 100 parts by weight of the aqueous dispersion polymer.
